# EUROPÄISCHE PATENTANMELDUNG

(11) **EP 2 017 515 A2**
(43) Veröffentlichungstag der Anmeldung: **21.01.2009**
(21) Anmeldenummer: 08005424.0
(22) Anmeldetag: 22.03.2008
(51) Int. Cl.: F16L 15/04, F16L 19/02, F16L 27/08, F16L 41/00

(54) **Fluidverbindungsvorrichtung**

(30) Priorität: 06.07.2007 DE 102007031741
(71) Anmelder: Eisele Pneumatics GmbH, 71332 Waiblingen (DE)
(72) Erfinder: Mueller, Bernhard, 71397 Leutenbach (DE)
(74) Vertreter: Bartels & Partner

(57) **Zusammenfassung**

Die Erfindung betrifft eine Fluidverbindungsvorrichtung (1) mit einem ersten Gewindeabschnitt (2), mittels dem die Fluidverbindungsvorrichtung (1) mit einem Gegenstück (10) verschraubbar ist, und mit einen zweiten Gewindeabschnitt (4), auf den ein Festlegeelement (6) aufschraubbar ist, wobei zwischen dem ersten und zweiten Gewindeabschnitt (2, 4) ein Aufnahmeraum (8) für ein Dichtmittel (12) angeordnet ist, und wobei durch Drehen des Festlegeelements (6) die Fluidverbindungsvorrichtung (1) mit dem Gegenstück (10) fluiddicht und mit wahlfreier Winkelausrichtung verbindbar ist.

## Beschreibung

Die Erfindung betrifft eine Fluidverbindungsvorrichtung, die mit einem Gegenstück verschraubbar ist. Derartige Vorrichtungen werden beispielsweise zum Verbinden von einem Fluidspeicher mit einer Fluidleitung eingesetzt.

Regelmäßig wird von einer Fluidverbindungsvorrichtung erwartet, dass diese eine fluiddichte Verbindung von einem oder mehreren Fluidleitern mit weiteren Fluidleitern und/oder Fluidspeichern gewährleistet. Daneben ist eine einfache Montage wünschenswert, insbesondere eine solche, die nur von einer Seite des Gegenstücks her erfolgen kann. Kommt als Gegenstück z. B. ein relativer großer Fluidspeicher zum Einsatz, so kann es in der Praxis oftmals auch sehr umständlich oder zumindest mit hohen Risiken verbunden sein, falls auf der Innenseite des Fluidspeichers zur Montage der Fluidverbindungsvorrichtung ebenfalls Arbeitsvorgänge notwendig sind.

Sofern das Gegenstück ein installierter Fluidspeicher oder eine bereits fest verlegte Fluidleitung ist, kommt es in der Praxis häufig auch dann zu Problemen, wenn die Fluidverbindungsvorrichtung an dem Fluidspeicher bzw. der Fluidleitung in einer vorgegebenen Orientierung festgelegt werden soll. Im Stand der Technik wird dies dadurch gelöst, dass ein konisches Dichtgewinde vorgesehen ist und dadurch die Fluidverbindungsvorrichtung in die gewünschte Position gedreht werden kann und gleichzeitig eine dichte Verbindung herstellt. Jedenfalls ohne zusätzliche Hilfsmittel ist dies jedoch nur ein einziges Mal möglich, und nach einem Lösen der Verbindung kann die Dichtheit bei erneutem Einschrauben nicht mehr gewährleistet werden.

Der Erfindung liegt daher die Aufgabe zugrunde, eine gattungsgemäße Fluidverbindungsvorrichtung bereitzustellen, welche die Nachteile des Standes der Technik überwindet. In einer Ausführungsart soll die Fluidverbindungsvorrichtung von einer Seite her an ein Gegenstück montierbar sein. In einer weiteren Ausführungsart soll die Fluidverbindungsvorrichtung fluiddicht und mit wahlfreier Winkelausrichtung mit einem Gegenstück verschraubbar sein.

Die Aufgabe ist durch die im Anspruch 1 bestimmte Fluidverbindungsvorrichtung gelöst. Besondere Ausführungsarten der Erfindung sind in den Unteransprüchen bestimmt.

In einer Ausführungsart weist die Fluidverbindungsvorrichtung einen ersten Gewindeabschnitt auf, mittels dem die Fluidverbindungsvorrichtung mit einem Gegenstück verschraubbar ist. Hierbei kann das Gegenstück eine Anschlussstelle eines Fluidspeichers, eines Fluidleiters oder auch einer weiteren Fluidverbindungsvorrichtung sein. Der erste Gewindeabschnitt kann durch ein Außengewinde gebildet sein, insbesondere durch ein zylindrisches Außengewinde, beispielsweise ein metrisches oder ein sogenanntes Whitworth-Rohrgewinde, das in ein entsprechendes Innengewinde des Gegenstücks einschraubbar ist. In einer Ausführungsart ist der erste Gewindeabschnitt nahe oder an einem freien Ende eines Abschnitts der Fluidverbindungsvorrichtung angeordnet, insbesondere nahe oder an einem freien Ende eines zylindrischen Anschlussstücks angeordnet.

Die Fluidverbindungsvorrichtung weist einen zweiten Gewindeabschnitt auf, auf den ein Festlegeelement aufschraubbar ist. Der zweite Gewindeabschnitt kann durch ein Außengewinde gebildet sein, insbesondere durch ein zylindrisches Außengewinde, beispielsweise ein metrisches oder ein sogenanntes Whitworth-Rohrgewinde, und das Festlegeelement kann ein Innengewinde zum Aufschrauben auf das Außengewinde aufweisen. In einer Ausführungsart ist der zweite Gewindeabschnitt von einem freien Ende eines Abschnitts der Fluidverbindungsvorrichtung beabstandet angeordnet, insbesondere von einem freien Ende eines zylindrischen Anschlussstücks beabstandet angeordnet.

In einer Ausführungsart ist der erste Gewindeabschnitt zwischen dem zweiten Gewindeabschnitt und einem freien Ende eines Abschnitts der Fluidverbindungsvorrichtung angeordnet. Die axiale Erstreckung des zweiten Gewindeabschnitts beträgt zwischen 30 und 150 % der axialen Erstreckung des ersten Gewindeabschnitts, vorzugsweise zwischen 40 und 100 % und insbesondere zwischen 50 und 80 %.

Zwischen dem ersten und zweiten Gewindeabschnitt ist ein vorzugsweise ringförmiger Aufnahmeraum für ein Dichtmittel angeordnet, der beispielsweise durch eine umlaufende, im Querschnitt im Wesentlichen trapezförmige Nut gebildet sein kann. In einer Ausführungsart der Erfindung ist die Erstreckung des Aufnahmeraums in Richtung einer Achse des zweiten Gewindeabschnitts größer als die Erstreckung des Dichtmittels in dieser Richtung. Als Erstreckung des Aufnahmeraums wird hierbei der Abstand in Richtung der Achse des zweiten Gewindeabschnitts bezeichnet, der zwischen den zwei Punkten liegt, an denen eine Verschiebebewegung des Dichtmittels in dieser Richtung durch die vorzugsweise schräg verlaufenden Ränder des Aufnahmeraums begrenzt ist. Dadurch ist das Dichtmittel innerhalb des Aufnahmeraums in axialer Richtung verschiebbar.

Zum Herstellen der Fluidverbindung wird die Fluidverbindungsvorrichtung mit dem ersten Gewindeabschnitt in das Gegenstück bis zur gewünschten Einschraubtiefe und/oder der gewünschten Orientierung eingeschraubt. Das Dichtmittel kann, muss dabei aber noch nicht in Anlage an das Gegenstück kommen. Im eingeschraubten Zustand wird dann durch Drehen das Festlegeelement in Richtung auf den ersten Gewindeabschnitt bewegt und dadurch auch das Dichtmittel in Richtung auf das Gegenstück bewegt und schließlich in dichtende Anlage gebracht und dadurch das Festlegeelement mit dem Gegenstück fluiddicht verbindbar. Die Verbindung kann auch mechanisch mit hoher Festigkeit erfolgen. Außerdem kann die Verbindung auch nach einem Lösen wieder hergestellt werden, und zwar ohne Verwendung von Hilfsmitteln dicht und in gleicher oder neuer wahlfreier Orientierung von Fluidverbindungsvorrichtung in Bezug auf das Gegenstück. In einer Ausführungsart der Erfindung ist die Fluidverbindungsvorrichtung vollständig von einer Seite des Gegenstücks her montierbar.

In einer Ausführungsart der Erfindung weist die Erstreckung des Aufnahmeraums in Richtung der Achse des zweiten Gewindeabschnitts ein Übermaß gegenüber der Erstreckung des Dichtmittels in dieser Richtung mindestens derart auf, dass mittels des aufschraubbaren Festlegeelementes mindestens eine solche Verschiebung des Dichtmittels möglich ist, die der translatorischen Bewegung des Festlegeelements in Richtung dieser Achse für eine Umdrehung des Festlegeelements entspricht. In anderen Worten, das Übermaß beträgt mindestens 100 % der Ganghöhe einer Schraubenbahn des zweiten Gewindeabschnitts. Dadurch ist die wahlfreie Winkelausrichtung der Fluidverbindungsvorrichtung in einem Winkelbereich von 360° gewährleistet. In einer Ausführungsart der Erfindung beträgt das Übermaß mindestens 25 %, vorzugsweise mindestens 50 % der Ganghöhe einer Schraubenbahn des zweiten Gewindeabschnitts. Ein derart gewähltes Übermaß erlaubt die wahlfreie Winkelausrichtung der Fluidverbindungsvorrichtung bei einem Winkelbereich von 90° bzw. 180°.

In einer Ausführungsart der Erfindung ist der Aufnahmeraum tiefer eingeschnitten als die Bahntiefe des ersten und/oder des zweiten Gewindeabschnitts, wobei die Bahntiefe hier als die Hälfte der Differenz zwischen dem Gewindedurchmesser und dem Kerndurchmesser des jeweiligen Gewindeabschnitts definiert ist. Dadurch ist die Bodenfläche des Aufnahmeraums frei von Gewindespuren der an den Aufnahmeraum angrenzenden Gewindeabschnitte. Die Bahntiefe kann zwischen 30 und 70 % betragen, vorzugsweise zwischen 40 und 60 % und insbesondere etwa 50 % der Erstreckung des Dichtmittels in radialer Richtung.

Der Durchmesser der Bodenfläche des Aufnahmeraums beträgt zwischen 90 und 150 %, vorzugsweise zwischen 95 und 120 % und insbesondere zwischen 100 und 105 % des Innendurchmessers des Dichtmittels im unverformten Zustand. Dadurch ist eine leichte Verschiebbarkeit des Dichtmittels in dem Aufnahmeraum gewährleistet. Außerdem ist dadurch eine dichte Anlage des Dichtmittels an der Fluidverbindungsvorrichtung gewährleistet.

In einer Ausführungsart der Erfindung ist die lichte Weite des Dichtmittels kleiner als der Außendurchmesser des ersten Gewindeabschnitts. In einer Ausführungsart der Erfindung ist das Dichtmittel in dem Aufnahmeraum zwischen dem ersten und dem zweiten Gewindeabschnitt verliersicher angeordnet.

In einer Ausführungsart der Erfindung ist am Übergang vom Aufnahmeraum zum ersten und/oder zum zweiten Gewindeabschnitt eine Fase angeordnet. Durch eine derartige Fase ist beispielsweise bei der Verwendung eines O-Rings als Dichtmittel gewährleistet, dass dieser O-Ring auch bei Verschiebung innerhalb des Aufnahmeraums und einem möglichem Anstoßen an den Rand des Aufnahmeraums nicht auf seiner Oberfläche beschädigt wird. Außerdem ist das Einsetzen und Austauschen des Dichtmittels vereinfacht.

In einer Ausführungsart der Erfindung ist im Zustand der fluiddichten Verbindung das Dichtmittel in Anlage an dem Festlegeelement, dem Aufnahmeraum und dem Gegenstück. Durch die Anlage am Festlegeelement und der Anordnung des Dichtmittels zwischen Festlegeelement und dem Gegenstück sowie dadurch, dass sich Dichtmittel und Festlegeelement auf der Außenseite des Gegenstücks befinden, führt eine translatorische Bewegung des Festlegeelements in Richtung des Gegenstücks, infolge der Drehung des Festlegeelements, zur Erzeugung eines Anpressdrucks des Dichtmittels gegen das Gegenstück und/oder den Aufnahmeraum, sobald das Festlegeelement hinreichend in Richtung des Gegenstücks geschraubt ist.

In einer Ausführungsart der Erfindung ist die Schraubenbahn des zweiten Gewindeabschnitts eine Fortsetzung der Schraubenbahn des ersten Gewindeabschnitts. Dadurch ist das Festlegeelement hemmungsarm über den ersten Gewindeabschnitt auf den zweiten Gewindeabschnitt aufschraubbar. Der erste und zweite Gewindeabschnitt können in einem einzigen Gewindeschneidvorgang hergestellt sein. Der Aufnahmeraum für das Dichtmittel kann anschließend durch einen Einstich angebracht sein.

In einer Ausführungsart der Erfindung beträgt die Erstreckung des Innengewindeabschnitts des Festlegeelements in Richtung der Achse des zweiten Gewindeabschnitts mehr als 80 %, vorzugsweise mehr als 100 % und insbesondere mehr als 120 % der Erstreckung des Aufnahmeraums in dieser Richtung.

In einer Ausführungsart der Erfindung ist die axiale Erstreckung des zweiten Gewindeabschnitts gleich groß oder größer als die Erstreckung des Innengewindeabschnitts des Festlegeelements in Richtung der Achse des zweiten Gewindeabschnitts. Dadurch ist das Innengewinde des Festlegeelements vollständig auf den zweiten Gewindeabschnitt aufschraubbar. In einer Ausführungsart ragt das Festlegemittel im vollständig aufgeschraubten Zustand nicht in den Aufnahmeraum für das Dichtmittel hinein.

In einer Ausführungsart der Erfindung weist das Festlegeelement eine Anlagefläche zur Anlage an dem Dichtmittel auf. In einer Ausführungsart der Erfindung schließt die Anlagefläche mit der Drehachse des Festlegeelements einen Winkel von weniger als 90° ein. In einer Ausführungsart der Erfindung ist die Anlagefläche durch einen Innenkonus des Festlegemittels gebildet. In einer Ausführungsart der Erfindung schließt die Anlagefläche mit der Drehachse des Festlegeelements einen Winkel von vorzugsweise zwischen 30° und 60° ein. In einer Ausführungsart der Erfindung schließt die Anlagefläche mit der Drehachse des Festlegeelements einen Winkel von ca. 45° ein.

In einer Ausführungsart der Erfindung ist das Dichtmittel durch einen Dichtring gebildet, beispielsweise durch einen O-Ring aus einem elastischen Werkstoff, insbesondere aus einem Polymerkunststoff.

In einer Ausführungsart der Erfindung ist die Fluidverbindungsvorrichtung mit mindestens zwei einen rechten Winkel einschließenden Anschlussstücken versehen. Der erste und zweite Gewindeabschnitt ist auf einem ersten Anschlussstück angeordnet. Ein zweites Anschlussstück kann identisch wie das erste Anschlussstück ausgebildet sein oder abweichend hiervon ausgebildet sein, beispielsweise lediglich ein durchgehendes Außen- oder Innengewinde aufweisen oder beispielsweise einen Steckanschluss eines Schlauchschnellverbinders aufweisen.

Weitere Vorteile, Merkmale und Einzelheiten der Erfindung ergeben sich aus den Unteransprüchen sowie der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt teilweise im Schnitt, eine Draufsicht auf eine Fluidverbindungsvorrichtung
- Fig. 2: zeigt teilweise im Schnitt eine mit einem Gegenstück verschraubte Fluidverbindungsvorrichtung
- Fig. 3: zeigt eine perspektivische Darstellung einer Fluidverbindungsvorrichtung

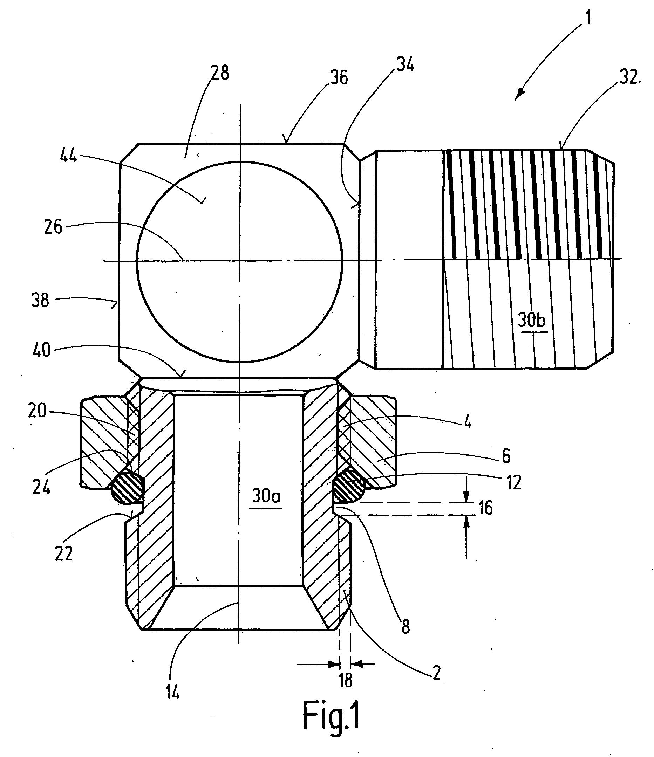

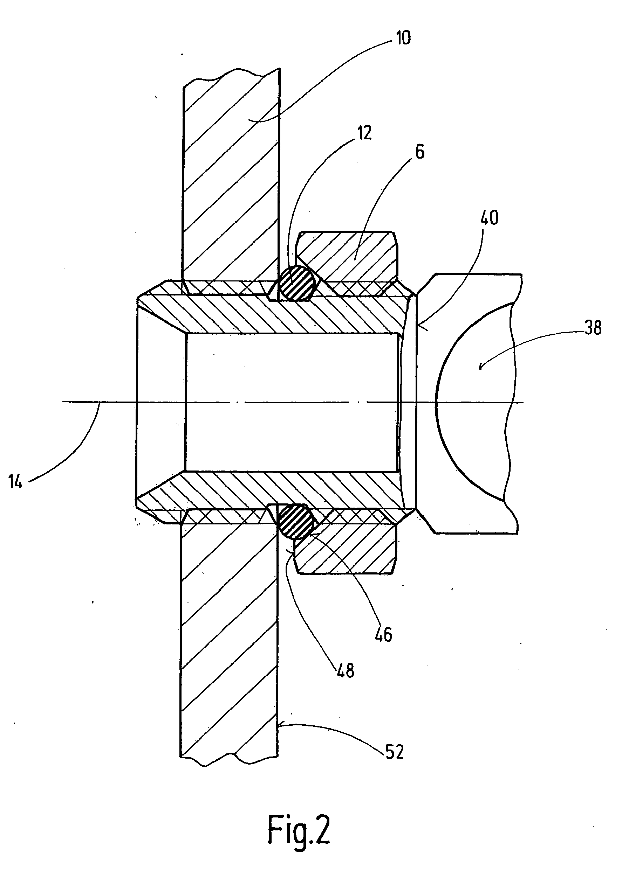

Die Fig. 1 zeigt, teilweise im Schnitt, eine Draufsicht auf eine Fluidverbindungsvorrichtung 1, die einen ersten Gewindeabschnitt 2 aufweist, mittels dem die Fluidverbindungsvorrichtung 1 mit einem Gegenstück 10 (siehe Fig. 2) verschraubbar ist.

Auf einen zweiten Gewindeabschnitt 4 ist ein im dargestellten Ausführungsbeispiel als Sechskantmutter ausgeführtes Festlegeelement 6 aufgeschraubt. Zur hemmungsarmen Montage des Festlegeelements 6 ist hierbei vorgesehen, dass die den ersten Gewindeabschnitt 2 beschreibende Schraubenlinie sich kontinuierlich in Richtung des zweiten Gewindeabschnitts 4 der Fluidverbindungsvorrichtung 1 fortsetzt und auch den dortigen zweiten Gewindeabschnitt 4 beschreibt. Die als Außengewinde ausgeführten ersten und zweiten Gewindeabschnitte 2 und 4 weisen die gemeinsame Achse 14 auf. Das Aufbringen des Festlegemittels 6 kann somit durch ein kontinuierliches Aufschrauben des Festlegemittels 6 zunächst auf den ersten Gewindeabschnitt 2 und anschließend auf den zweiten Gewindeabschnitt 4 erfolgen. Des Weiteren ist in einem Aufnahmeraum 8, der im Ausführungsbeispiel als umlaufende Nut der Fluidverbindungsvorrichtung 1 ausbildet ist, ein als Dichtring oder als O-Ring ausgeführtes Dichtmittel 12 eingebracht.

Der Aufnahmeraum 8 weist hierbei sowohl beim Übergang in den ersten Gewindeabschnitt 2 als auch beim Übergang in den zweiten Gewindeabschnitt 4 jeweils eine Fase 22 bzw. 24 auf. Die Tiefe der umlaufenden Nut des Aufnahmeraumes 8 ist so gewählt, dass sich der Aufnahmeraum 8 in radialer Richtung, d. h. senkrecht zur Achse 14, näher bis an die Achse 14 erstreckt als die Bahntiefe 18 des ersten und zweiten Gewindeabschnitt 2 und 4. Unter Bahntiefe 18 der Gewindeabschnitte 2 bzw. 4 wird hierbei die halbe Differenz zwischen dem Gewindedurchmesser und dem Kerndurchmesser der Gewindeabschnitte 2 bzw. 4 verstanden. Die Erstreckung des Aufnahmeraums 8 in Richtung der Achse 14 ergibt sich aus der Summe der Erstreckung des Dichtmittels 12 in dieser Richtung und einem Übermaß 16.

In Folge des Übermaßes 16 ist das Dichtmittel 12 im Aufnahmeraum 8 in Richtung der Achse 14 verschiebbar. Das Festlegemittel 6 weist in seiner Ausführung als Sechskantmutter einen Innengewindeabschnitt 20 auf. Der erste und zweite Gewindeabschnitt 2, 4 ist an einem ersten Anschlussstück 30a angeordnet. Ein zweites Anschlussstück 30b der Fluidverbindungsvorrichtung 1 ist über eine erste Koppelfläche 34 des Koppelabschnitts 28 mit dem ersten Anschlussstück 30a verbunden. In einer Ausführungsart ist das zweite Anschlussstück 30b und der Koppelabschnitt 28 einstückig ausgebildet. Das erste Anschlussstück 30a ist separat ausgebildet und mit dem Koppelabschnitt 28 fluiddicht verbunden, insbesondere mit dem Koppelabschnitt 28 verschraubt.

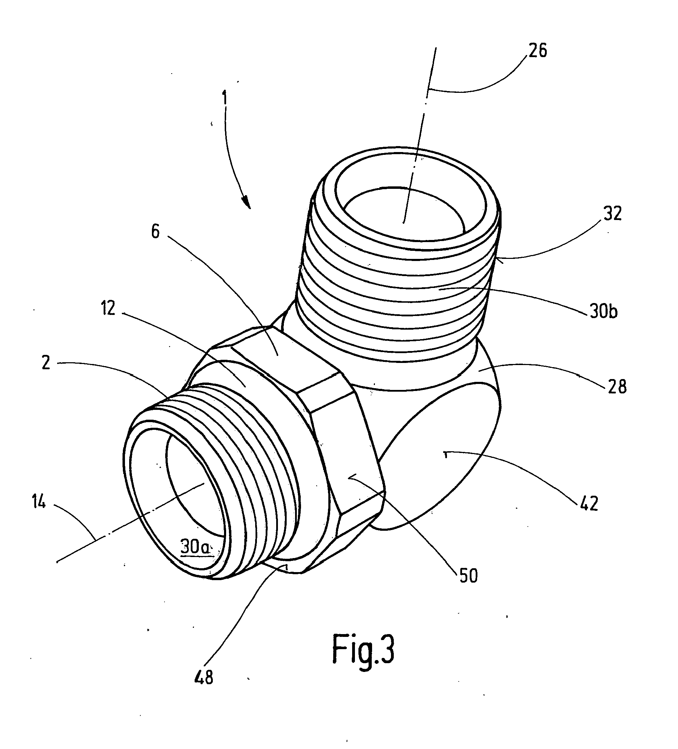

Dergestalt ist die Leitung eines Fluids zwischen den Anschlussstücken 30a und 30b möglich. Das Anschlussstück 30b weist ein durchgehendes Außengewinde 32 mit einer Achse 26 auf. Im dargestellten Ausführungsbeispiel schließen die Achse 14 und die Achse 26 einen rechten Winkel miteinander ein. Der im Wesentlichen würfelförmige Koppelabschnitt 28 weist eine erste Koppelfläche 34, eine zweite Koppelfläche 36, eine dritte Koppelfläche 38, eine vierte Koppelfläche 40 und eine sechste Koppelfläche 44 auf, die an den Seiten des Würfels angeordnet sind. Die in der Fig. 1 nicht dargestellte fünfte Koppelfläche 42 ist in der Fig. 3 dargestellt.

Abweichend von der in Fig. 1 dargestellten Fluidverbindungsvorrichtung 1 sind selbstverständlich auch Fluidverbindungsvorrichtungen realisierbar, die in Form eines "T-Stücks", eines "Y-Stücks" oder anderer Formen ausgebildet sind. Ähnlich dem Anschlussstück 30b, welches über die erste Koppelfläche 34 mit dem Koppelabschnitt 28 verbunden ist, kann ein weiteres Anschlussstück auf der gegenüberliegenden dritten Koppelfläche 38 angeordnet sein. Sämtliche sechs Koppelflächen 34, 36, 38, 40, 42 und 44 können jeweils mit einem Anschlussstück in der Art des Anschlussstücks 30b oder des Anschlussstücks 30a versehen werden. Zur Erreichung einer noch größeren Verzweigungsvielfalt als bei dem weitgehend würfelförmigen Koppelabschnitt 28 möglich, sind auch Ausführungsbeispiele mit Koppelabschnitten realisierbar, die im Wesentlichen eine Kugeloberfläche aufweisen.

Die Fig. 2 zeigt, teilweise im Schnitt, eine mit einem Gegenstück 10, beispielsweise einer Schottwand, verschraubte Fluidverbindungsvorrichtung 1. Das Dichtmittel 12 in Form eines O-Rings ist mittels des als Sechskantmutter ausgeführten Festlegeelements 6 zwischen der Seitenfläche 52 des Gegenstücks 10 und der Fase 46 des Festlegeelements 6 angeordnet und kann mittels des Festlegeelements 6 in dichtende Anlage an die Seitenfläche 52 und den Aufnahmeraum 8 gebracht werden. Hierzu wird das Festlegeelement 6 solange gedreht, bis die Fase 46 an dem Dichtmittel 12 in Anlage kommt und anschließend so weit verschoben ist, bis eine dichtende Anlage des Dichtmittels 12 an der Seitenwand 52 gewährleistet ist. Das Dichtmittel 12 ist dabei auch in dichtender Anlage an dem Anlageraum 8, insbesondere in dichtender Anlage an der Bodenfläche des Anlageraums 8. Hierbei kann vorgesehen sein, dass die der Seitenfläche 52 des Gegenstücks 10 gegenüberliegende Stirnfläche 48 des Festlegeelements 6 als Anschlag verwendet wird, indem der Aufnahmeraum 8 sowie das Festlegeelement 6 so gestaltet sind, dass ein Anschlag des Festlegeelements 6 mit seiner Stirnfläche 48 am Gegenstück 10 genau dann erfolgt, wenn durch den hierdurch auf das Dichtmittel 12 ausgeübten Druck die erwünschte Dichtwirkung erreicht ist.

Die Fig. 3 zeigt eine perspektivische Darstellung der Fluidverbindungsvorrichtung 1. Hierbei ist das Festlegeelement 6 bereits auf den zweiten Gewindeabschnitt 4 aufgeschraubt und das Dichtmittel 12 bereits in den Aufnahmeraum 8 eingebracht. Derart vorbereitet lässt sich die Fluidverbindungsvorrichtung 1 nun mit dem ersten Gewindeabschnitt 2 in ein Gegenstück 10 einschrauben. Das Übermaß 16 des Aufnahmeraums 8 ermöglicht eine beliebige Orientierung des Anschlussstücks 30b in Bezug auf das Gegenstück 10, insbesondere eine gegenüber der in Fig. 3 gewählten Darstellung um 90, 180 oder 270° um die Achse 14 gedrehte Orientierung bei gleichzeitiger fluiddichter Verbindung. Auch sämtliche Zwischenstellungen, d. h. jeder beliebige Winkel zwischen 0 und 360°, für die Orientierung des Anschlussstücks 30b in Bezug auf das Gegenstück 10 lassen sich wahlfrei einstellen. Für die dichtende Anlage des Dichtmittels 12 an dem Fig. 3 nicht dargestellten Gegenstück 10 ist die beschriebene Ausrichtung des Anschlussstücks 30b unerheblich, da die Dichtheit jeweils durch ein geeignetes Verdrehen des Festlegeelements 6 erreichbar ist. Das Verdrehen des Festlegeelements 6 kann insbesondere über Angriffsflächen 50 des als Sechskantmutter ausgeführten Festlegeelements 6 erfolgen.

## Patentansprüche

1. Fluidverbindungsvorrichtung (1) mit einem ersten Gewindeabschnitt (2), mittels dem die Fluidverbindungsvorrichtung (1) mit einem Gegenstück (10) verschraubbar ist, und mit einen zweiten Gewindeabschnitt (4), auf den ein Festlegeelement (6) aufschraubbar ist, wobei zwischen dem ersten und zweiten Gewindeabschnitt (2, 4) ein Aufnahmeraum (8) für ein Dichtmittel (12) angeordnet ist, und wobei durch Drehen des Festlegeelements (6) die Fluidverbindungsvorrichtung (1) mit dem Gegenstück (10) fluiddicht und mit wahlfreier Winkelausrichtung verbindbar ist.

2. Fluidverbindungsvorrichtung (1) nach Anspruch 1, **dadurch gekennzeichnet, dass** die Erstreckung des Aufnahmeraums (8) in Richtung einer Achse (14) des zweiten Gewindeabschnitts (4) größer ist als die Erstreckung des Dichtmittels (12) in dieser Richtung und **dadurch** das Dichtmittel (12) in dem Aufnahmeraum (8) verschiebbar ist.

3. Fluidverbindungsvorrichtung (1) nach Anspruch 1 oder 2, **dadurch gekennzeichnet, dass** die Erstreckung des Aufnahmeraums (8) in Richtung einer Achse (14) des zweiten Gewindeabschnitts (4) ein Übermaß (16) gegenüber der Erstreckung des Dichtmittels (12) in dieser Richtung aufweist, und dass das Übermaß (16) mindestens 25 %, vorzugsweise mindestens 50 %, und insbesondere mindestens 100 %, der Ganghöhe einer Schraubenbahn des zweiten Gewindeabschnitts (4) beträgt.

4. Fluidverbindungsvorrichtung (1) nach einem der vorangehenden Ansprüche, **dadurch gekennzeichnet, dass** der Aufnahmeraum (8) tiefer eingeschnitten ist als die Bahntiefe (18) des ersten und/oder des zweiten Gewindeabschnittes (2, 4).

5. Fluidverbindungsvorrichtung (1) nach einem der vorangehenden Ansprüche, **dadurch gekennzeichnet, dass** am Übergang von dem Aufnahmeraum (8) zum ersten und/oder zweiten Gewindeabschnitt (2, 4) eine Fase (22, 24) vorgesehen ist.

6. Fluidverbindungsvorrichtung (1) nach einem der vorangehenden Ansprüche, **dadurch gekennzeichnet, dass** im Zustand der fluiddichten Verbindung das Dichtmittel (12) in Anlage an dem Festlegeelement (6), dem Aufnahmeraum (8) und dem Gegenstück (10) ist.

7. Fluidverbindungsvorrichtung (1) nach einem der vorangehenden Ansprüche, **dadurch gekennzeichnet, dass** die Schraubenbahn des zweiten Gewindeabschnitts (4) eine Fortsetzung der Schraubenbahn des ersten Gewindeabschnitts (2) ist.

8. Fluidverbindungsvorrichtung (1) nach einem der vorangehenden Ansprüche, **dadurch gekennzeichnet, dass** das Festlegeelement (6) einen Innengewindeabschnitt (20) zum Aufschrauben auf den zweiten Gewindeabschnitt (4) aufweist, und dass die Erstreckung des Innengewindeabschnitts (20) in Richtung einer Achse (14) des zweiten Gewindeabschnitts (4) größer ist als die Erstreckung des Aufnahmeraums (8) in dieser Richtung.

9. Fluidverbindungsvorrichtung (1) nach einem der vorangehenden Ansprüche, **dadurch gekennzeichnet, dass** das Festlegeelement (6) einen Innengewindeabschnitt (20) zum Aufschrauben auf den zweiten Gewindeabschnitt (4) aufweist, und dass die Erstreckung des Innengewindeabschnitts (20) in Richtung einer Achse des zweiten Gewindeabschnitts (4) geringer oder gleich ist als die Erstreckung des zweiten Gewindeabschnitts (4) in dieser Richtung.

10. Fluidverbindungsvorrichtung (1) nach einem der vorangehenden Ansprüche, **dadurch gekennzeichnet, dass** das Festlegeelement (6) eine Anlagefläche zur Anlage an dem Dichtmittel (12) aufweist, und dass die Anlagefläche mit der Drehachse (14) des Festlegeelements (6) einen Winkel von weniger als 90° einschließt, vorzugsweise zwischen 30° und 60°, und insbesondere etwa 45°.

11. Fluidverbindungsvorrichtung (1) nach einem der vorangehenden Ansprüche, **dadurch gekennzeichnet, dass** das Dichtmittel (12) ein Dichtring ist.

12. Fluidverbindungsvorrichtung (1) nach einem der vorangehenden Ansprüche, **dadurch gekennzeichnet, dass** die lichte Weite des Dichtmittels (12) kleiner ist als der Außendurchmesser des ersten Gewindeabschnitts (2).
